(19) Europäisches Patentamt
European Patent Office
Office européen des brevets

(11) **EP 2 209 180 A1**

(12) **EUROPÄISCHE PATENTANMELDUNG**

(43) Veröffentlichungstag:
**21.07.2010 Patentblatt 2010/29**

(51) Int Cl.:
*H02J 7/02* (2006.01)      *H02M 5/22* (2006.01)
*H02M 1/42* (2007.01)

(21) Anmeldenummer: **09015179.6**

(22) Anmeldetag: **08.12.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **20.01.2009   DE 102009000328**

(71) Anmelder: **SEMIKRON Elektronik GmbH & Co. KG
90431 Nürnberg (DE)**

(72) Erfinder: **Schreiber, Dejan
90408 Nürnberg (DE)**

(54) **Batterieladegerät und Verfahren zu dessen Betrieb**

(57)      Ein Batterieladegerät (2) enthält einen HF-Speichertransformator (12), dessen Primärwicklung (14a) über einen Taktschalter (16) an einem zweipoligen Eingang (4) für Wechselspannung ($U_N$) angeschlossen ist, und dessen Sekundärwicklung (14b) nach Art eines Sperrwandlers mit einem einen zweipoligen Ausgang (8) für die Batterie (10) aufweisenden Gleichrichter (20) beschaltet ist, und eine Strom (IN) und Spannung ($U_N$) am Eingang (4) erfassende Messeinheit (22), und eine den Taktschalter (16) in Abhängigkeit von Strom ($I_N$) und Spannung ($U_N$) bedienende Steuerung (24).

Bei einem Verfahren zum Betreiben eines Batterieladegerätes (2) schaltet das Steuergerät (24) den Taktschalter (16) im ständigen Wechsel ein erstes Zeitintervall ($\Delta T1$) lang ein und ein zweites Zeitintervall ($\Delta T2$) lang aus, wobei das erste Zeitintervall ($\Delta T1$) dann beendet wird, wenn der Strom (IN) auf einen Grenzwert ($I_0$) angestiegen ist, der dem mit einem Skalierüngsfaktor (34) multipliziertem augenblicklichem Wert der Spannung ($U_N$) entspricht, und wobei das zweite Zeitintervall ($\Delta T2$) so lange gewählt wird, dass die Gesamtdauer von erstem ($\Delta T1$) und zweitem Zeitintervall ($\Delta T2$) der Periodendauer eines Intervalls zulässiger Arbeitsfrequenzen ($f_a$) des HF-Speichertransformators (12) entspricht.

Fig. 1

**Beschreibung**

Die Erfindung betrifft ein Batterieladegerät und ein Verfahren zu dessen Betrieb.

Das Konzept elektrischer Personenkraftwagen basiert auf dem Prinzip, die elektrische Energie zum Laden der Antriebsbatterie aus dem Energieversorgungsnetz - oder mit anderen Worten "aus der Steckdose" - zu beziehen. Hierfür ist ein Batterieladegerät notwendig. Die in einem Privathaushalt übliche, aus einer Steckdose entnehmbare Leistung beträgt bei einer heute üblichen Absicherung mit einer 16A-Sicherung ca. 3,5kW. Die Anforderungen an ein Batterieladegerät sind, dass dieses dem Spannungsnetz sinusförmige Netzströme entnimmt und die Batterie durch das Ladegerät galvanisch, z.B. durch einen Trenntransformator, vom Netz getrennt ist.

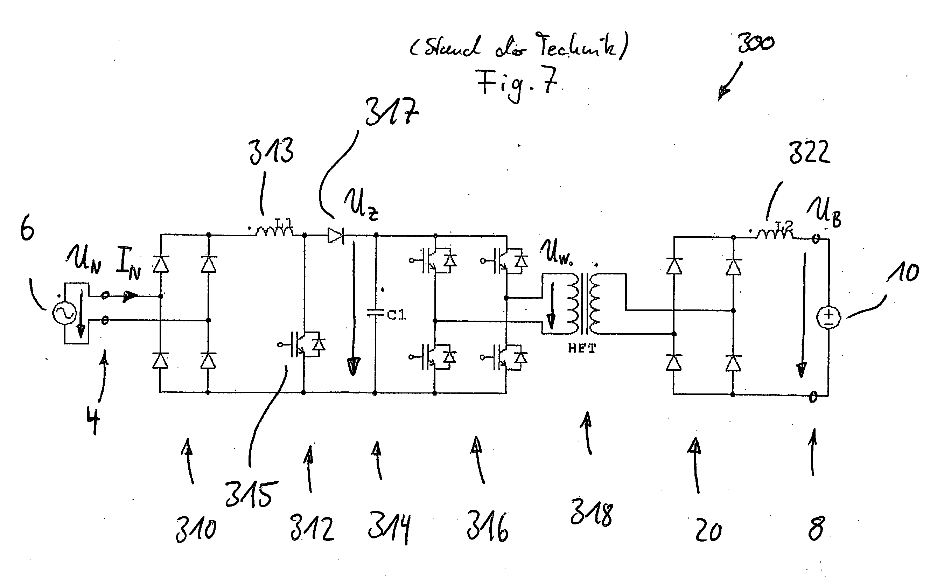

Der prinzipielle Aufbau heutiger Batterieladegeräte, welche die obigen Forderungen erfüllen, ist in Fig.7 gezeigt. Das bekannte Batterieladegerät 300 ist mit seinem Eingang 4 an einem Versorgungsnetz 6 und mit seinem Ausgang 8 an einer Batterie 10 angeschlossen. Die Netzspannung $U_N$ des Versorgungsnetzes 6 liegt hierbei im Bereich 100-250V bei 50-60Hz Netzfrequenz. Die Batteriespannung $U_B$ der Batterie 10 liegt beispielsweise in einem weiten Spannungsbereich zwischen 250V und 450V und ist abhängig vom Batterieladezustand.

Im Batterieladegerät 300 ist der Eingang 4 auf einen ersten Gleichrichter 310 geführt, welcher einen PFC 312 (Powerfactor-Corrector - Hochsetzsteller) speist. Dieser enthält eine Drossel 313 der Induktivität L1, einen Kurzschlussschalter 315 und eine Freilaufdiode 317. Der PFC 312 lädt einen Zwischenkreiskondensator 314 auf eine konstante reguliert Zwischenkreisspannung $U_Z$ von z.B. 380V auf.

Dem Zwischenkreiskondensator 314 ist ein als H-Brücke ausgeführter Wechselrichter 316 nachgeschaltet, welcher mit Mittelbis Hochfrequenz getaktet wird und an seinem Ausgang eine geregelte, mittel- bis hochfrequente Spannung $U_W$ erzeugt. Die Spannung $U_W$ speist die Primärseite bzw. Primärwicklung eines klein und leicht ausführbaren HF-Transformators 318. Der HF-Transformator 318 passt die Spannung $U_W$ durch Übertragung auf seine Sekundärseite bzw. Sekundärwicklung der Batteriespannung $U_B$ an. Gleichzeitig bewirkt der HF-Transformator 318 die galvanische Trennung der Batterie 10 vom Versorgungsnetz 6 bzw. der Sekundärseite des Batterieladegerätes 300 von dessen Primärseite. Dem HF-Transformator 318 ist sekundärseitig ein zweiter Gleichrichter 20 nachgeschaltet, welcher über eine Drossel 322 der Induktivität $L_2$ auf den Ausgang 8 geführt ist.

Die Batteriespannung $U_B$ wird hierbei durch im Wechselrichter 316 implementierte, gezielte Pulsverfahren, insbesondere Pulsweitenmodulation (PWM) geregelt.

Das Batterieladegerät 300 erfüllt damit die wesentlichen oben genannten Anforderungen, insbesondere aus dem Versorgungsnetz 6 am Eingang 4 einen sinusförmigen Netzstrom IN zu beziehen.

Um unkontrollierbare bzw. zu hohe Kondensatorladeströme (z.B. einen unzulässig hohen Inrush-Current beim Einschalten des Batterieladegerätes 300) zu vermeiden, ist es bekannt, den Gleichrichter 310 nicht wie in Fig. 8 als Diodenbrücke, sondern als gesteuerte Halbbrücke mit Thyristoren aufzubauen.

Das Batterieladegerät 300 ist nach lehrbuchhaftem Konzept aufgebaut, bei dem insgesamt vier Umrichter hintereinander in Reihe geschaltet sind, nämlich der Gleichrichter 310, der PFC 312, der Wechselrichters 316 und der Gleichrichter 20. Insgesamt sind eine Vielzahl von Halbleiterschaltern bzw. passiven Komponenten eingesetzt. Die Energieflussrichtung ist auf die Richtung vom Spannungsnetz 6 zur Batterie 10 begrenzt, eine Energierückspeisung ins Netz nicht möglich.

Aufgabe der Erfindung ist es, ein verbessertes Batterieladegerät und ein entsprechendes Verfahren zu dessen Betrieb anzugeben.

Die Aufgabe wird hinsichtlich der Vorrichtung gelöst durch ein Batterieladegerät gemäß Patentanspruch 1. Dieses enthält einen HF-Speichertransformator mit einer Primär- und einer Sekundärwicklung. Die Primärwicklung ist über einen Taktschalter an einem zweipoligen Eingang angeschlossen. Der Taktschalter ist hierbei ein bidirektionaler Schalter, d.h. Strom kann diesen in beiden Richtungen durchströmen. Im Betrieb wird das Batterieladegerät dort mit Wechselspannung, z.B. aus einem Versorgungsspannungsnetz versorgt. Die Sekundärwicklung des HF-Speichertransformators ist nach Art eines Sperrwandlers mit dem Eingang eines Gleichrichters, insbesondere Diodengleichrichters beschaltet. Der Gleichrichter weist auf seiner Ausgangsseite einen zweipoligen Ausgang auf. An diesem ist die im Betrieb zu ladende Batterie anschließbar. Das Batterieladegerät verfügt weiterhin über eine Messeinheit, welche die Augenblickswerte von Strom und Spannung am Eingang - also bei Anschluss an ein Versorgungspannungsnetz dessen momentane Netzspannung und den entsprechenden in das Batterieladegerät fließenden Strom - erfasst.

Weiterhin verfügt das Batterieladegerät über eine Steuerung, welche den Taktschalter in Abhängigkeit der von der Messeinheit gemessenen Werte von Strom und Spannung bedient, also ein- oder ausschaltet. Ein Ausschalten bewirkt dabei, dass der Stromfluss vom Eingang zur Primärwicklung unterbrochen wird. Der HF-Speichertransformator bewirkt die galvanische Trennung einer dem Eingang zugewandten Primärseite und einer dem Ausgang zugewandten Sekundärseite des Batterieladegerätes.

Die Erfindung beruht hierbei auf folgenden Erkenntnissen bzw. Überlegungen: Das bekannte Batterieladegerät verfügt über einen Zwischenkreiskondensator, der aus Sicht des Eingangs einen spannungseingeprägten Verbraucher darstellt. Da das anzuschließende Spannungsnetz eine spannungseingeprägte Quelle darstellt, muss zwischen Eingang und Zwischenkreiskondensator eine erste Drossel eingesetzt werden. Aus den gleichen Gründen muss zwischen dem Zwischenkreiskondensator und dem Ausgang, also der Batterie, eine weitere Drossel eingesetzt werden.

Der Hochfrequenztransformator muss wegen der galvanischen Trennung im Batterieladegerät verbleiben. Dieser verfügt aber bereits über eine primäre und sekundäre Wicklung, welche sowohl für die maximal möglichen aus dem Spannungsnetz fließenden Ströme als auch für die maximalen Batterieladeströme dimensioniert sein müssen. Die Wicklungen des HF- Transformators können nun gemäß der Erfindung auch für die Konstruktion der oben genannten Induktivitäten bzw. Drosseln benützt werden. Mit anderen Worten sollen die Wicklungen des Transformators neben ihrem eigentlichen Zweck der transformatorischen Übertragung auch als dem Eingang und Ausgang bzw. dem Spannungsnetz und der Batterie zugehörige Drosseln eine Doppelfunktion erfüllen.

Die Anzahl der passiven Komponenten soll gegenüber dem bekannten Batterieladegerät reduziert werden. Entfernt man hierzu den Zwischenkreiskondensator aus der Schaltung wird das erfindungsgemäße Gerät kleiner und leichter sein, jedoch keine kapazitive Energiespeicherfähigkeit mehr besitzen. Die aus dem Spannungsnetz entnommene Leistung muss dann ohne kapazitive Zwischenspeicherung direkt zur Batterie übertragen werden.

Erfindungsgemäß werden daher Eingangsgleichrichter, Hochsetzsteller, Zwischenkreiskondensator und Wechselrichter durch eine einzige Einheit ersetzt. Die Eingangsspannung bzw. der Strom aus dem Versorgungsnetz wird nämlich direkt über den Taktschalter an eine Induktivität $L_1$ als Drossel in Form der Primärwicklung des HF-Transformators übertragen. Diese überträgt die Energie auf die Drossel L2 in Form der Sekundärwicklung des HF-Transformators. Die Induktivitäten $L_1$ und $L_2$ sind in Form der Primär- und Sekundärwicklungen eng gekoppelt und auf einem Magnetkern mit Luftspalt gewickelt. Auf diese Weise bilden sie den Hochfrequenztransformator und bewirken gleichzeitig die galvanische Trennung der Primär- und Sekundärseite.

Das erfindungsgemäße Batterieladegerät wird nun von der Steuerung hinsichtlich seines Taktschalters mit einer Schaltperiode variabler Länge betrieben. Diese weist nämlich ein erstes, der Primärseite zugeordnetes Zeitintervall auf, in dem der Taktschalter geschlossen ist. In einem zweiten, der Sekundärseite zugeordneten Zeitintervall ist der Taktschalter geöffnet. Durch die Dauer der jeweiligen Schaltzeiten werden die elektrischen Größen, nämlich die jeweiligen Ströme der Primär- und Sekundärseite des Batterieladegerätes geregelt.

Die Steuerung ermittelt zunächst im Betrieb den zeitlichen Verlauf der Netzspannung. Mit Hilfe eines beliebig, aber fest gewählten Skalierungsfaktors bildet sie die Kurvenform der Netzspannung auf eine mit dieser in Phase liegende Grenzkurve für Stromwerte ab. Diese Grenzkurve kann auch auf andere Weisen ermittelt werden, z.B. durch Ermittlung der Nulldurchgänge der Netzspannung und der sinusförmigen Vorgabe einer gewünschten Amplitude.

Zu Beginn jedes ersten Zeitintervalls wird der Taktschalter eingeschaltet und der tatsächlich in das Batterieladegerät fließende, aufgrund der als Drossel wirkenden Primärwicklung allmählich ansteigende Strom gemessen. Erreicht der Netzstrom einen Grenzwert, der, dem augenblicklichem Wert der Grenzkurve entspricht, wird der Taktschalter geöffnet. Das erste Zeitintervall endet und das zweite beginnt.

Aufgrund der Sperrwandlerfunktionalität fließt erst jetzt Strom durch die Sekundärwicklung und die im Transformator gespeicherte Energie fließt zur Batterie. Im HF-Transformator überträgt sich also der vorher in der Primärwicklung fließende Strom in die Sekundärwicklung, was bedeutet, dass die Energie an die Batterie übergeben wird. Das zweite Zeitintervall wird so gewählt, dass die Schaltperiode, also die Summe von erstem und zweiten Zeitintervall einer zulässigen Arbeitsfrequenz des HF-Transformators entspricht. Die Dauer aufeinanderfolgender Schaltperioden kann sich hierbei stets ändern, da insbesondere der Anstieg des Stromes bis zum Grenzwert im ersten Zeitintervall unterschiedlich lange dauert.

Mit anderen Worten wird im ersten Teil einer Schaltperiode die aus der Quelle entnommen und in der primärseitigen Induktivität gespeichert. Im zweiten Teil der Schaltperiode wird Energie aus der sekundärseitigen Induktivität an die Last übergeben. Der Austausch bzw. die Aufteilung der Energie erfolgt intern im HF-Transformator zwischen primär- und sekundärseitiger Induktivität.

Zwei Alternativen sind möglich: In der ersten Alternative wird im zweiten Teil der Schaltperiode die gesamte Energie, die im HF-Transformator gespeichert ist bzw. in diesen im ersten Teil der Schaltperiode eingespeist wurde, an die Batterie übergeben. Der HF-Transformator wird dann im darauffolgenden ersten Teil der Schaltperiode erneut mit Energie aufgeladen. In der zweiten Alternative wird im zweiten Teil der Schaltperiode nur ein Teil der gespeicherten Energie an die Batterie übergeben. Im darauffolgenden ersten Teil der Schaltperiode wird dann in den HF-Transformator additiv weitere Energie eingespeist.

Das erfindungsgemäße Batterieladegerät erfüllt die oben genannten Anforderungen, benötigt hierzu jedoch weniger Schaltungskomponenten. Im erfindungsgemäßen Batterieladegerät ist insbesondere die Anzahl der passiven Komponenten deutlich reduziert. Der Zwischenkreiskondensator, welcher für die volle Umrichterleistung dimensioniert sein muss, ist beseitigt. Die Netzleistung wird ohne Zwischenspeicherung direkt zur Batterie übertragen. Die Netzspannung ist über den bidirektionalen Schalter direkt an die Induktivität $L_1$ gebunden. An einer zu ladenden Batterie können mehrere erfindungsgemäße Batterieladegeräte mit ihren Ausgängen parallel geschaltet und betrieben werden, wobei jedes Gerät soviel Leistung in die Batterie speist wie dieses jeweilige Batterieladegerät liefern kann.

Die Induktivitäten $L_1$ und $L_2$ sind eng miteinander gekoppelt und auf einen einzigen Magnetkern gewickelt, so dass sie gleichsam einen Hochfrequenztransformator für die galvanische Trennung von Primär- und Sekundärseite bilden. Der Hochfrequenztransformator ist auch gleichzeitig Drossel für die Primärseite und Sekundärseite. Für den Hochfrequenztransformator gilt, dass das Produkt aus Netzspannung und Zeit pro Primärwicklung gleich dem Produkt aus Ausgangsspannung und Zeit $T_2$ pro Sekundärwicklung beträgt. Es gilt mit der Eingangsspannung $u_1(t)$ der Primärwicklung, der Ausgangsspannung der Sekundärwicklung $u_2(t)$, dem ersten Zeitintervall von $T_0$ bis $T_1$ und dem zweiten Zeitintervall von $T_1$ bis $T_2$ und den Wicklungszahlen $N_1$ der Primär- und $N_2$ der Sekundärseite:

$$\frac{1}{N_1}\int_{T_0}^{T_1}u_1(t)\,\mathrm{d}t = \frac{1}{N_2}\int_{T_1}^{T_2}u_2(t)\,\mathrm{d}t \; .$$

Mit anderen Worten ist die Summe der Voltsekunden pro Wicklung im HF-Speichertransformator pro Schaltperiode gleich Null. Das Batterieladegerät ist für Zwei-Quadrantenbetrieb geeignet, also für einen Leistungsfluss vom Eingang zum Ausgang, also vom Versorgungsspannungsnetz zur Batterie.

In einer vorteilhaften Ausführungsform der Erfindung ist an der Primärwicklung des HF-Speichertransformators ein Freilaufzweig angeschlossen bzw. dieser zugeordnet. Der Freilaufzweig enthält einen von der Steuerung bedienbaren Freilaufschalter. Durch den Freilaufschalter kann der Freilaufzweig geschlossen oder geöffnet werden. Ist er geöffnet, hat der Freilaufzweig keinerlei Wirkung im Batterieladegerät. Ist der Freilaufschalter geschlossen, kann auch nach Öffnen des Taktschalters die bereits aus dem Spannungsnetz entnommene und im HF-Transformator gespeicherte Energie dort verbleiben bzw. der in dessen Primärwicklung fließende Strom weiterfließen. Die Energie muss nicht an die Batterie weitergegeben werden. Dies ist nützlich, wenn die Batterie beispielsweise voll geladen ist, das Batterieladegerät jedoch noch in Betrieb ist.

In einer weiteren bevorzugten Ausführungsform ist alternativ oder zusätzlich an der Sekundärwicklung des HF-Speichertransformators ein entsprechender Freilaufzweig angeschlossen. Ein fließender Strom fließt dann durch die Sekundärwicklung weiter. Die Energie wird so ebenfalls im HF-Transformator gehalten.

In einer weiteren vorteilhaften Ausführungsform kann der Freilaufzweig für die Sekundärwicklung des HF-Speichertransformators auch in dem sekundärseitig angeordneten Gleichrichter integriert sein. Ein Gleichrichter weist stets eine Topologie auf, die die beiden Enden der Sekundärwicklung ohnehin verbindet. Durch Einbau geeigneter schaltbarer Bauteile kann so der Freilaufzweig ohne viel Aufwand realisiert werden.

Besonders einfach ist dies zu bewerkstelligen, wenn der Gleichrichter ein Diodengleichrichter ist und mindestens zwei der Zweige des Gleichrichters je einen Freilaufzweig mit einem von der Steuerung bedienten kurzschließenden Freilaufschalter bilden.

Mindestens zwei der Dioden sind also einem Freilaufzweig zugeordnet. Die Dioden können dann um einen parallel geschalteten kurzschließbaren Bypasszweig ergänzt werden, der auch einen Stromfluss in Sperrrichtung der Dioden ermöglicht. Ein Bauteil, das entsprechendes Verhalten einschließlich des Diodenverhaltens zeigt, ist ein IGBT. In besonders vorteilhafter Weise werden also mindestens zwei Dioden des Diodengleichrichters durch je einen IGBT ersetzt. Der Bypasszweig enthält hierbei also stets einen von der Steuerung bedienbaren kurzschließenden Bypassschalter. Der Diodengleichrichter in modifizierter Form erfüllt somit beide Aufgaben, nämlich Gleichrichtung des transformierten Stromes und auf Wunsch die Freilaufeigenschaft.

Wenn sämtliche Dioden des Diodengleichrichters jeweils einen kurzschließenden Bypassschalter - bzw. die entsprechende oben erwähnte Ausgestaltung - aufweisen, entsteht ein Wechselrichter. Mit anderen Worten ist dann der Gleichrichter durch einen alternativ als solchen betreibbaren Wechselrichter ersetzt. Durch den Wechselrichter kann aus der Batterie abgegebene Energie bzw. Strom wechselgerichtet und zurück zum HF-Speichertransformator übertragen werden. Die Primärseite des Batterieladegerätes ist ohnehin bereits für Vier-Quadrantenbetrieb geeignet, so dass hierdurch die gesamte Schaltung für den Vier-Quadrantenbetrieb geeignet wird. Energie ist damit auch aus der Batterie ins Spannungsnetz rückspeisbar. Dies ist interessant für Energieversorgungsunternehmen, die eine große Anzahl am Versorgungsnetz angeschlossener Elektro-PKWs als kollektiven Energiespeicher nutzen könnten.

Andererseits wäre so die kollektive Einspeisung von in einzelnen PKWs z.B. durch ein Solarpanel oder anderweitig erzeugter Energie in das Stromnetz möglich.

In einer weiteren vorteilhaften Ausführungsform enthält das Batterieladegerät noch einen den Ausgang vom Eingang trennenden Trennschalter, welcher ebenfalls von der Steuerung bedienbar ist. Der Trennschalter kann hierbei z.B. den Ausgang vom restlichen Batterieladegerät trennen. Durch einen entsprechenden Trennschalter kann die Batterie vom Batterieladegerät oder zumindest einem Teil dessen bzw. dem Eingang und damit dem Versorgungsnetz getrennt werden.

Auch hier ist in einer besonders bevorzugten Ausführungsform der Trennschalter im Gleichrichter integriert, da dieser das dem Ausgang nächstliegende Bauteil im Batterieladegerät ist. Im Falle eines Diodengleichrichters können z.B. zwei Zweige jeweils unterbrechbar sein. Z.B. können im jeweiligen Zweig zwei in Gegenrichtung in Reihe geschaltete IGBTs vorgesehen sein.

Hinsichtlich des Verfahrens wird die Aufgabe der Erfindung gelöst durch ein Verfahren zum Betreiben eines Batterieladegerätes wie oben bereits - zusammen mit den Vorteilen - beschrieben. Bei diesem schaltet also das Steuergerät den Taktschalter in ständigem Wechsel ein und aus. Das Einschalten geschieht während eines ersten Zeitintervalls, wobei das erste Zeitintervall dann beendet wird, wenn der Strom auf einen Grenzwert angestiegen ist. Dieser Grenzwert ist der mit einem Skalierungsfaktor multiplizierte augenblickliche Wert der gemessenen Spannung. Das zweite Zeitintervall wird dann so gewählt, dass die Gesamtdauer von erstem und zweitem Zeitintervall der Periodendauer eines Intervalls zulässiger Arbeitsfrequenzen des HF-Speichertransformators entspricht. In anderen Worten: Der HF-Transformator ist in der Regel nicht nur für eine einzige, sondern für ein Intervall von Arbeitsfrequenzen - z.B. zwischen 16kHz und 25kHz - zugelassen. Diesem Intervall ist ein Intervall von zugehörigen Periodendauern zugeordnet. Erstes und zweites Zeitintervall werden so gewählt, dass deren Summe eine Periodendauer ergibt, die in dem eben genannten zulässigen Intervall liegt.

Mit anderen Worten wird durch die Wahl des ersten Zeitintervalls erreicht, dass die Einhüllende des Stromes eine Kurve ergibt, die zum zeitlichen Verlauf der Spannung lediglich skaliert, also mit diesem phasengleich ist. Hierdurch wird erreicht, dass am Eingang dem Spannungsnetz ein bis auf eine Restwelligkeit der Spannung gleichförmiger, also in der Regel sinusförmiger Strom entnommen wird, und der Leistungsfaktor des Batterieladegerätes Eins beträgt.

In einer weiteren bevorzugten Ausführungsform wird der Skalierungsfaktor - z.B. von der Steuerung - aus dem Maximalwert der Spannung und einer maximalen Soll-Stromstärke am Eingang ermittelt. Somit wird für den am Eingang fließenden Strom eine Grenzkurve festgelegt, die als Maximum den maximalen Soll-Strom aufweist und welchen der tatsächlich fließende Strom somit niemals überschreiten kann. Im Gegensatz zu einer abschneidenden Maximalstrombegrenzung bleiben so die Netzströme des Batterieladegerätes stets sinusförmig, da diese durch die grenzkurve als Ganzes herabskaliert werden.

In einer weiteren bevorzugten Ausführungsform wird innerhalb des ersten und/oder zweiten Zeitintervalls ein drittes Zeitintervall lang die Primär- oder Sekundärseite des HF-Transformators im Freilaufbetrieb betrieben. Hierzu sind z.B. die o.g. Freilaufzweige geeignet. Es ergeben sich die o.g. Möglichkeiten, die bereits aus dem Netz - bzw. der Batterie bei Rückwärtsrichtung des Energieflusses -bezogene Energie im HF-Speichertransformator bzw. dessen als Drossel wirkenden Wicklungen zu behalten, ohne diese an die Batterie bzw. das Versorgungsnetz weiterzugeben.

Für eine weitere Beschreibung der Erfindung wird auf die Ausführungsbeispiele der Zeichnungen verwiesen. Es zeigen, jeweils in einer schematischen Prinzipskizze:

Fig. 1 ein Batterieladegerät gemäß der Erfindung,
Fig. 2 Ausführungsformen des a) Taktschalters und b) Gleichrichters aus Fig. 1,
Fig. 3 den zeitlichen Verlauf verschiedener elektrischer Größen aus Fig. 1 bei a) teilweiser und b) vollständiger Energieübertragung zwischen Transformator und Batterie,
Fig. 4 den zeitlichen Verlauf weiterer elektrischer Größen aus Fig. 1,
Fig. 5 ein alternatives Batterieladegerät mit a,b) verschiedenen sekundärseitigen und primärseitigen Freilaufzweigen,
Fig. 6 ein alternatives Batterieladegerät mit Trennschalter für den Ausgang,
Fig. 7 ein Batterieladegerät gemäß Stand der Technik.

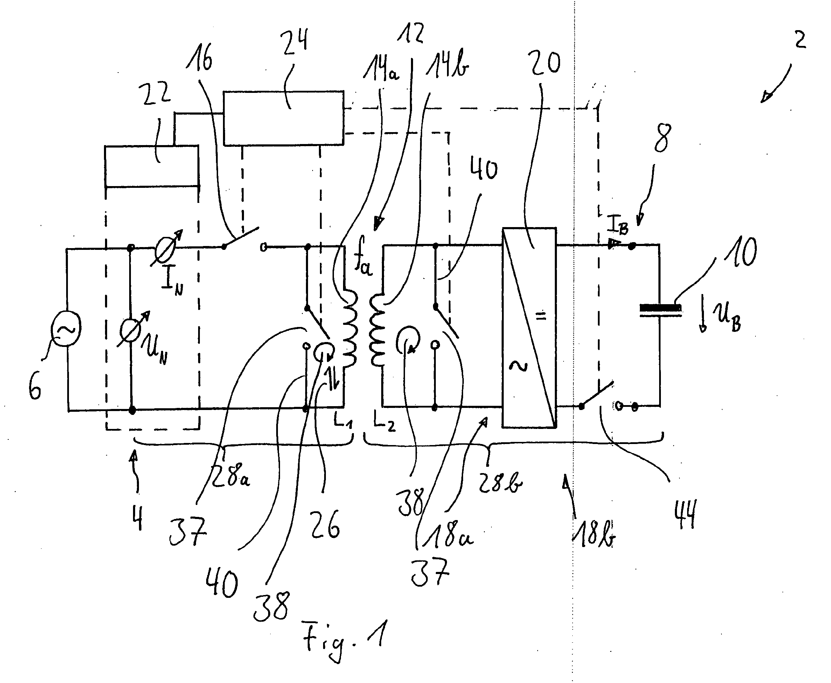

Fig. 1 zeigt ein Batterieladegerät 2 mit einem Eingang 4, über welchen es an einem Versorgungsspannungsnetz 6 mit Netzspannung $U_N$=230V angeschlossen ist, und einem Ausgang 8, an welchem eine Batterie 10 mit Batteriespannung $U_B$ angeschlossen ist. Im Wesentlichen enthält das Batterieladegerät 2 einen HF-Trenntransformator 12, dessen primärseitige Wicklung 14a die Induktivität L1 aufweist und über einen Schalter 16 mit dem Eingang 4 verbunden ist. Die sekundärseitige Wicklung 14b weist die Induktivität L2 auf und ist auf den Eingang 18a eines Gleichrichters 20 geführt. Der Ausgang 18b des Gleichrichters 20 ist mit dem Ausgang 8 verbunden, an welchem die Batteriespannung $U_B$ anliegt.

Das Batterieladegerät 2 weist weiterhin eine Messeinheit 22 auf, welche die am Eingang 4 anliegende Netzspannung $U_N$ sowie den in das Batterieladegerät 2 am Eingang 4 fließenden Netzstrom IN erfasst. Die Messeinheit 22 ist mit einer Steuerung 24 verbunden, welche den Schalter 16 betätigt. Der Schalter 16 ist ein bidirektionaler Schalter, d.h. er lässt im geschlossenen Zustand sowohl positive als auch negative Netzströme IN, also in beiden Flussrichtungen, angedeutet durch die Pfeile 26, passieren. Im Transformator 12 sind die Wicklungen 14a und 14b auf einen gemeinsamen nicht dargestellten Magnetkern mit Luftspalt gewickelt und daher die Induktivitäten L1 und L2 eng miteinander gekoppelt. Der HF-Transformator 12 stellt die galvanische Trennung zwischen der Primärseite 28a und der Sekundärseite 28b des Batterieladegerätes 2 dar. Der HF-Transformator 12 ist ein HF-Speichertransformator und mit dem Gleichrichter 20 nach Art eines Sperrwandlers verschaltet. Strom kann im HF-Transformator 12 also nur in der Primärwicklung 14a oder in der Sekundärwicklung 14b fließen.

Fig. 1 zeigt außerdem eine alternative Ausgestaltung der Primärseite 28a und/oder Primärseite 28b: Ein von der Steuerung 24 durchschaltbarer Freilaufzweig 40 bzw. eine Freilaufmasche 38 ist über der primärseitigen 14a bzw. sekundärseitigen Wicklung 14b kurzschließbar. In den betreffenden Wicklungen gespeicherte Energie ist dann durch Schließen des Freilaufzweigs 40 primärseitig bzw. sekundärseitig speicherbar, ohne dass diese zurück an das Versorgungsnetz 6 oder an die jeweils andere Wicklung oder die Batterie 10 abgegeben werden muss.

Eine weitere alternative Ausführungsform des Batterieladegerätes enthält einen von der Steuerung 24 schaltbaren Trennschalter 44, der im Beispiel nach dem Gleichrichter 20 angeordnet ist. Dieser dient zur Abtrennung der Batterie 10 und kann auch an anderer geeigneter Stelle im Stromkreis der Sekundärseite 28b angeordnet sein.

In einer alternativen, nicht dargestellten Ausführungsform sind mehrere erfindungsgemäße Vorrichtungen bzw. Teile solcher - zumindest HF-Transformatoren 12 mit jeweils zugeordneten Taktschaltern 16 - zwischen einem einzigen Versorgungsnetz 6 und einer einzigen Batterie 10 parallel geschaltet.

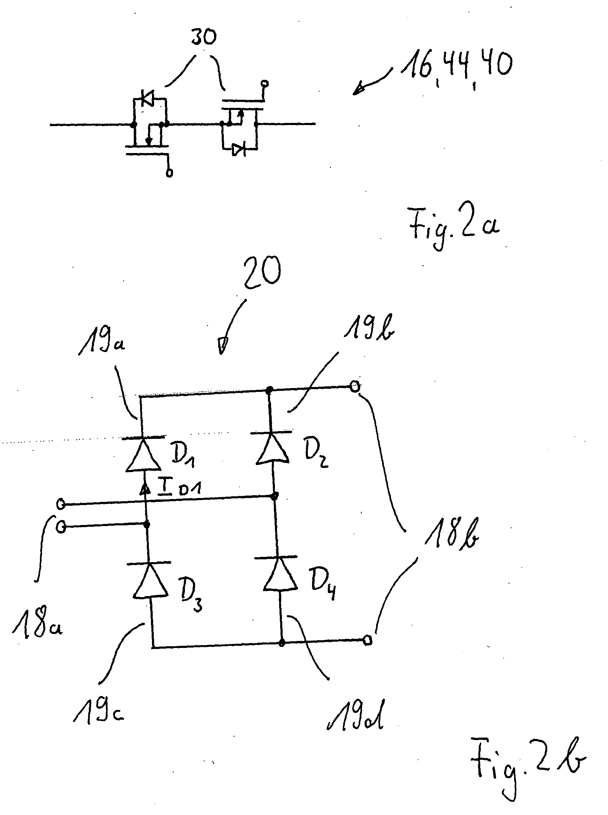

Fig. 2a zeigt eine konkrete Realisierungsform eines Schalters 16 oder eines Trennschalter 44 oder Schalters der Freilaufzweige 40, welcher bidirektional schaltbar ist, als Reihenschaltung zweier RBIGBTs 30.

Fig. 2b zeigt eine Ausgestaltung des Gleichrichters 20 als Diodengleichrichter mit den Dioden $D_{1-4}$ in je einem Teilzweig 19a-d. Im Betrieb fließt durch jede Diode ein entsprechender Strom, z.B. $I_{D1}$.

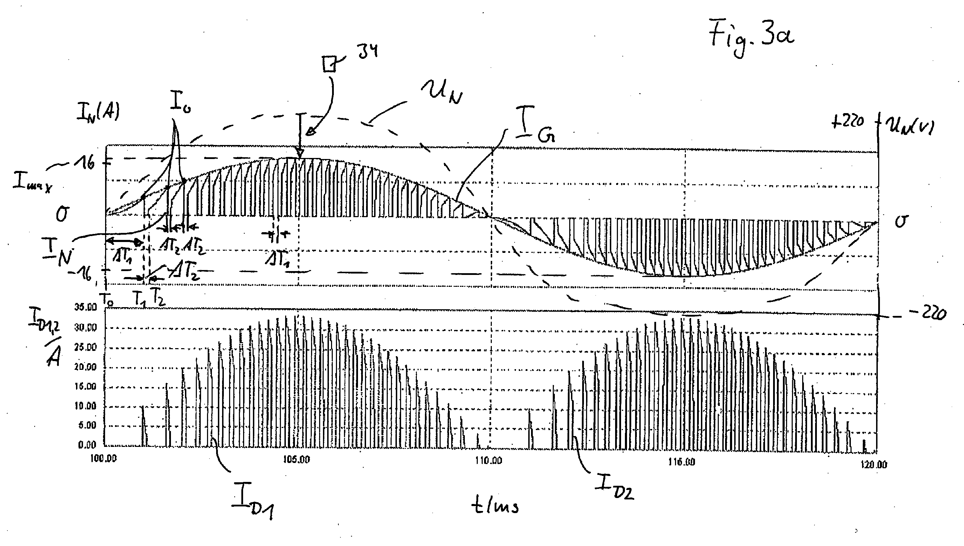

Fig. 3a zeigt verschiedene elektrische Größen im Betrieb des Batterieladegerätes 2, aufgetragen über der Zeit t/ms. Dargestellt ist eine komplette Schwingungsperiode von 20ms der 50Hz-Netzspannung $U_N$, welche zwischen -220 und +220 V sinusförmig schwingt. Die Messeinheit 22 erfasst den zeitlichen Verlauf dieser Spannung und übermittelt diesen an die Steuerung 24. Diese skaliert den zeitlichen Verlauf der Netzspannung $U_N$ mit Hilfe eines Skalierungsfaktors 34 auf eine sinusförmige Kurve eines Grenzstromes $I_G$. Der Skalierungsfaktor 23 wird dabei so bestimmt, dass der maximale Wert $I_{max}$ des Grenzstromes $I_G$ jeweils $\pm 16A$ beträgt.

Die Steuerung 24 beginnt nun zum Zeitpunkt T0 damit, den Schalter 16 zu schließen und verfolgt mit Hilfe der Messeinrichtung 2 den Verlauf der Stromstärke $I_N$. Sobald die Stromstärke IN den Wert des Grenzstromes $I_G$ erreicht, was zum Zeitpunkt T1, nach einem Zeitintervall ΔT1=T1-T0 der Fall ist, schaltet die Steuerung 24 den Schalter 16 wieder auf. Der aktuelle Wert des Grenzstromes $I_G$ bildet hier also den Grenzwert $I_0$ für den Strom $I_N$. Anschließend hält die Steuerung 24 den Schalter 16 bis zum Zeitpunkt T2 geschlossen. Im vorliegenden Beispiel ist die Länge des Zeitintervalls T2-T1 konstant gewählt. Zum Zeitpunkt T2, nach dem Zeitintervall ΔT2=T2-T1 wird der Schalter 16 wieder geschlossen und die Steuerung 24 beobachtet erneut, wann der Strom IN dem Grenzstrom $I_G$ gleich ist, woraufhin die Steuerung 24 den Schalter 16 nach einem erneuten Intervall ΔT1 wieder öffnet. Dieses Zeitintervall ΔT1 ist in der Regel nicht gleich dem vorherigen Zeitintervall ΔT1. Der Schalter 16 bleibt dann wieder für das Zeitintervall ΔT2 geschlossen, welches jedoch stets gleich lang ist.

Das Intervall ΔT1, in welchem der Schalter geöffnet bleibt, ist also abhängig davon, wann der Netzstrom IN den Grenzstrom $I_G$ erreicht und somit variabel. Die Summe jeweils zweier aufeinanderfolgender Intervalle ΔT1 und ΔT2 stellt die Schaltperiode des Taktschalters 16 dar, die die Periodendauer der Arbeitsfrequenz des HF-Transformators 12 darstellt. In Fig. 3a ist zu erkennen, dass alleine während einer Halbwelle der Netzspannung $U_N$ der HF-Transformator 12 andauernd mit verschiedenen Arbeitsfrequenzen betrieben wird.

Das Zeitintervall ΔT2 ist so gewählt, dass die sich ergebenden Arbeitsfrequenzen im zulässigen Bereich des HF-Transformators 12 liegen. Für die in Fig. 3a gezeigte erste, positive Halbwelle der Netzspannung $U_N$ ergeben sich auf der Sekundärseite 28b Ströme $I_{D1}$ durch die Diode D1, welche in Fig. 3a ebenfalls dargestellt sind. Diese fließen jeweils während der Zeitintervalle ΔT2, wenn also der Schalter 16 geöffnet ist. Durch die entsprechend erzeugten Strompulse des Stromes $I_{D1}$ wird die Batterie 10 geladen, da der Diodenstrom hier direkt den Batteriestrom $I_B$ bildet. In der zweiten Halbwelle in Fig. 3a sind die Stromrichtungen in der Schaltung gemäß Fig. 1 umgekehrt, so dass nun die Diode $D_2$ mit dem Strom $I_{D2}$ durchströmt wird.

Während des ersten jeweiligen Zeitintervalls ΔT1 wird also Leistung aus dem Versorgungsnetz 6 entnommen und in der Primärwicklung 14a gespeichert, während des Zeitintervalls ΔT2 wird die entsprechend gespeicherte Leistung (über den nicht dargestellten Magnetkern bzw. dessen Laufspalt) über die Wicklung 14b an die Batterie 10 übertragen. Im Beispiel beträgt die Zeit ΔT2 konstant 100 μs.

Zu erkennen ist auch, dass der Leistungsfaktor zwischen der Netzspannung $U_N$ und dem Netzstrom IN bzw. dessen Einhüllender cosφ=1 bzw. λ=1 beträgt. Die Einhüllende fällt mit dem Grenzstrom $I_G$ zusammen.

In Fig. 3a wird in den jeweiligen Zeitintervallen ΔT2 nicht die gesamte Energie aus dem HF-Transformator 12 entnommen; es findet nur eine teilweise Energieübertragung statt. Die Stromkurven $I_{D1,2}$ sinken daher am Ende des jeweiligen Intervalls nicht auf Null ab, sondern sind angeschnitten. In den Zeitintervallen ΔT1 beginnt daher der Stromfluss in die Primärwicklung 14a auch nicht bei Null, sondern angeschnitten an einer höheren Stromstärke.

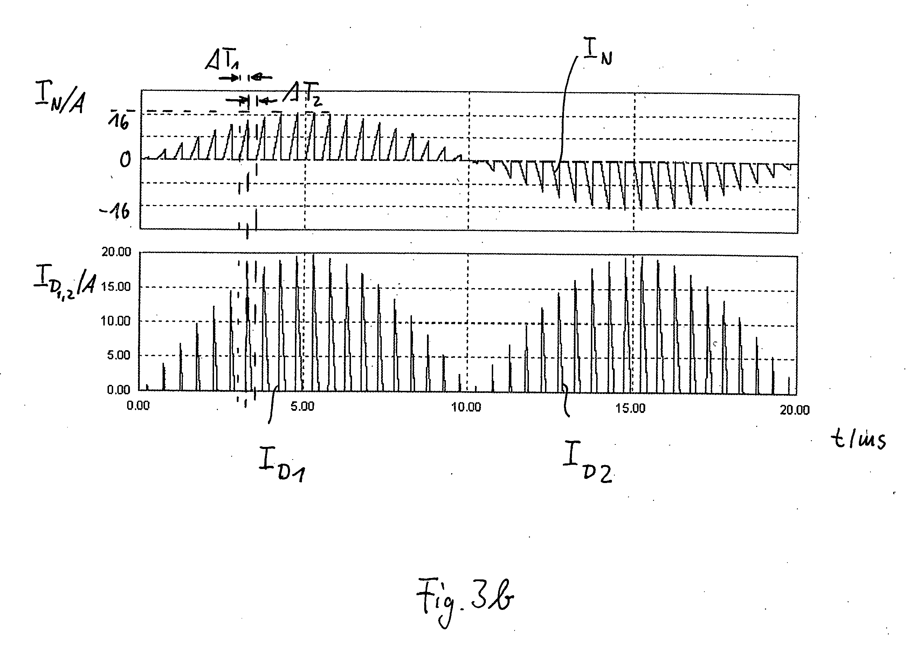

Fig. 3b zeigt dagegen einen Fall, bei dem in jedem Zeitintervall ΔT2 der HF-Transformator gänzlich zur Batterie 10 hin entladen wird. Die Stromkurve $I_{D1,2}$ sinkt in jedem Zeitintervall ΔT2 auf Null ab. Die Ladekurve des Stromes IN beginnt daher auch in jedem Intervall ΔT1 bei Null.

Für die oben genannte Parallelisierung von HF-Transformatoren 12 mit Taktschaltern 16 ist dann ein weiteres vorteilhaften Ansteuerverfahren möglich: Bei einer N-fachen Parallelisierung werden die einzelnen Taktschalter 16 mit einem Phasenversatz von z.B. 360°/N angesteuert. Dies führt an der Batterie zu einer gegenüber Fig. 3a,b deutlich geglätteten Stromkurve des Batteriestromes $I_B$, da sich die von den einzelnen HF-Transformatoren erzeugten Ströme mit entsprechendem Phasenversatz überlagern.

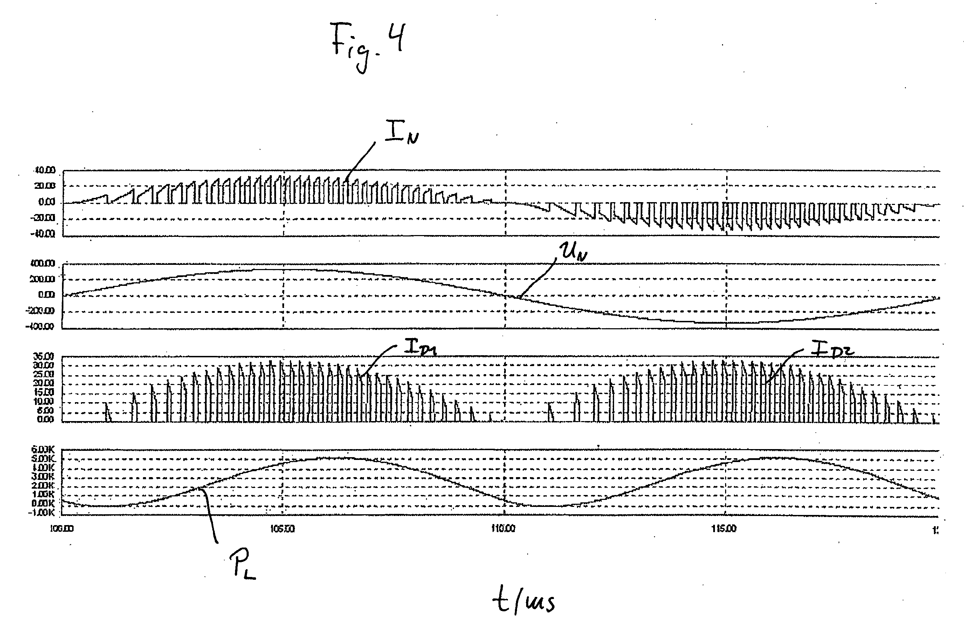

Fig. 4 zeigt nochmals die Ladeströme $I_{D1}$ und $I_{D2}$ aus Fig. 3 zusammen mit der Ladeleistung $P_L$ der Batterie. Die Batterieladeleistung entspricht dem Strom $I_{D1}$ bzw. $I_{D2}$ multipliziert mit der Batteriespannung $U_B$ bzw. in etwa der Ausgangsspannung der Sekundärwicklung 14b und pulsiert mit doppelter Netzfrequenz. Der Leistungsscheitelwert ist gleich zwei mal dem Mittelwert.

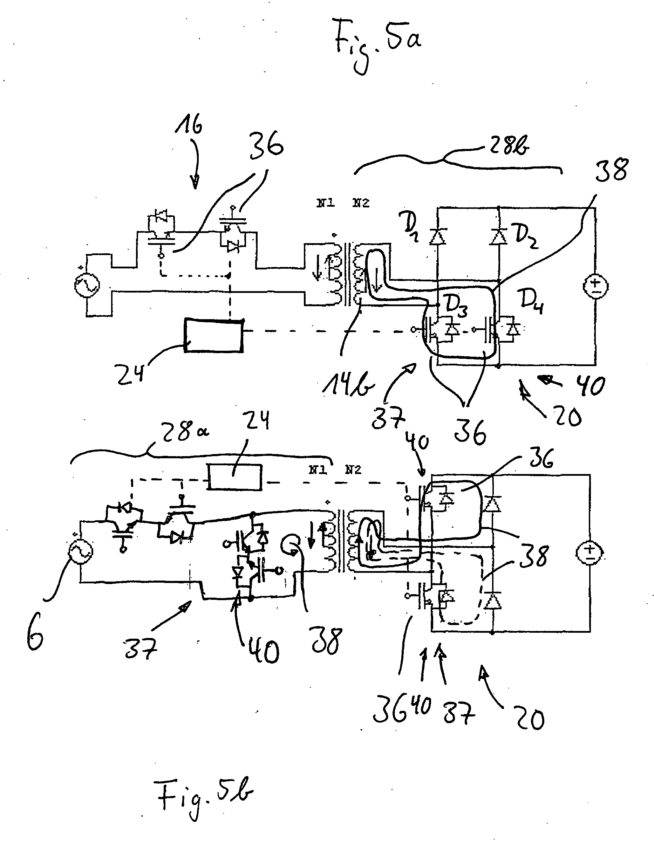

Fig. 5a,b zeigen Ausführungsformen, bei denen im Gegensatz zu Fig. 2 der Schalter 16 durch zwei in Reihe geschaltete IGBTs 36 realisiert ist. Insbesondere sind jedoch auf der Sekundärseite 14b im Gleichrichter die Dioden $D_3$ und $D_4$ durch jeweils einen IGBT 36 ersetzt. Der IGBT 36 integriert mit anderen Worten die Diode D3 zusammen mit einem durchschaltbaren Bypassschalter und bildet so einen Freilaufschalter 37 aus, indem die Sperrwirkung der Diode D3 gezielt aufgehoben werden kann. Der die Diode D3 enthaltende Zweig des Gleichrichters 20 bildet so einen Freilaufzweig 40. Für die sekundärseitige Wicklung 14b ergibt sich so eine Freilaufmasche 38 oder Freilaufzweig durch die Dioden und die entsprechend leitend geschalteten IGBTs 36 am Ort der Dioden D3 und D4. Während der Taktperiode $\Delta T2$ kann so die in der als Drossel wirkenden Wicklung 14b gespeicherte Energie erhalten werden, indem deren Strom durch die Freilaufmasche 38 fließt.

Fig. 5b zeigt eine alternative Ausgestaltung eines Gleichrichters 20 bei dem die Dioden $D_1$ und $D_3$ durch IGBTs 36 ersetzt sind. So ergeben sich für die Wicklung 14b für verschiedene Stromrichtungen zwei verschiedene Freilaufmaschen 38.

Die IGBTs 36 werden in allen Fällen zentral von der Steuerung 24 entsprechend bedient, um die Freilaufmaschen 38 zum geeigneten Zeitpunkt freizuschalten. Auf der Primärseite 28a ist ein entsprechend konkret ausgestalteter Freilaufzweig 40 bzw. Freilaufschalter 37 zu sehen.

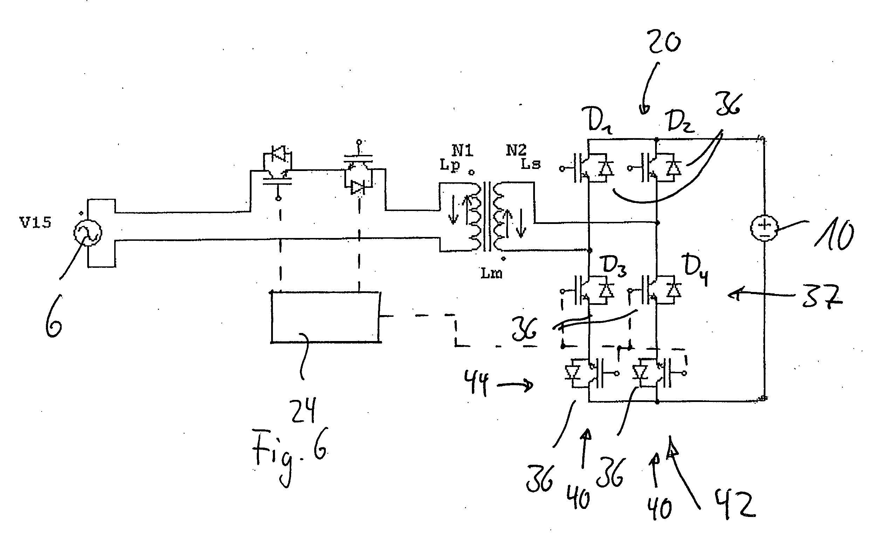

Fig. 6 zeigt eine weitere Ausführungsform eines Batterieladegerätes 2, bei welchem im Gleichrichter 20 in Reihe zu den IGBTS an Stellen der Dioden $D_3$ und $D_4$ noch Sperr-IGBTs 36 in Reihe geschaltet sind, um die Batterie 10 vollständig vom Batterieladegerät 2 abzusperren, so dass hier keinerlei Stromfluss stattfinden kann. Die untere Hälfte des Gleichrichters 20 in Fig. 6 kann hierdurch vollständig gesperrt werden. Die beiden IGBTs 36 im Zweig der Diode D3 wirken hier also als Trennschalter 44. Zum Gleichrichterbetrieb sind die unteren IGBTS 36 jeweils leitend zu schalten.

In Fig. 6 sind außerdem auch die Dioden D1 und D2 durch IGBTS 35 ersetzt. Dies ermöglicht einen Betrieb des Gleichrichters 20 als Wechselrichter 42. So ist ein Energietransport von der Batterie 10 zum Versorgungsnetz 6 möglich.

Bezugszeichenliste

| | |
|---|---|
| 2 | Batterieladegerät |
| 4 | Eingang |
| 6 | Versorgungsnetz |
| 8 | Ausgang |
| 10 | Batterie |
| 12 | HF-Transformator |
| 14a,b | wicklung |
| 16 | Taktschalter |
| 18a | Eingang |
| 18b | Ausgang |
| 19a-d | Teilzweig |
| 20 | Gleichrichter |
| 22 | Messeinheit |
| 24 | Steuerung |
| 26 | Pfeil |
| 28a | Primärseite |
| 28b | Sekundärseite |
| 30 | RBIGBT |
| 34 | Skalierungsfaktor |
| 36 | IGBT |
| 37 | Freilaufschalter |
| 38 | Freilaufmasche |
| 40 | Freilaufzweig |
| 42 | Wechselrichter |
| 44 | Trennschalter |
| | |
| 300 | Batterieladegerät |
| 310 | Gleichrichter |
| 312 | PFC |
| 313 | Drossel |
| 314 | Zwischenkreiskondensator |
| 315 | Kurzschlussschalter |
| 316 | Wechselrichter |
| 317 | Freilaufdiode |
| 318 | HF-Transformator |
| 322 | Drossel |
| | |
| $U_Z$ | Zwischenkreisspannung |
| $U_W$ | Spannung |
| $U_B$ | Batteriespannung |
| $U_N$ | Netzspannung |
| IN | Netzstrom |
| t | Zeit |
| $I_G$ | Grenzstrom |
| $D_{1-4}$ | Diode |
| $I_{D1,2}$ | Strom |
| $P_L$ | Ladeleistung |
| $f_a$ | Arbeitsfrequenz |
| $L_{1,2}$ | Induktivität |
| $I_{max}$ | Maximalstrom |
| $\Delta T_{1-3}$ | Zeitintervall |
| $I_0$ | Grenzwert |
| $I_B$ | Batteriestrom |

**Patentansprüche**

1. Batterieladegerät (2) mit einem HF-Speichertransformator (12), dessen Primärwicklung (14a) über einen Taktschalter (16) an einem zweipoligen Eingang (4) für Wechselspannung ($U_N$) angeschlossen ist, und dessen Sekundärwicklung (14b) nach Art eines Sperrwandlers mit einem einen zweipoligen Ausgang (8) für die Batterie (10) aufweisenden Gleichrichter (20) beschaltet ist, und mit einer Strom (IN) und Spannung ($U_N$) am Eingang (4) erfassenden Messeinheit (22), und mit einer den Taktschalter (16) in Abhängigkeit von Strom (IN) und Spannung ($U_N$) bedienenden Steuerung (24).

2. Batterieladegerät (2) nach Anspruch 1, mit einem der Primärwicklung (14a) zugeordneten, einen von der Steuerung (24) bedienten kurzschließenden Freilaufschalter (37) enthaltenden Freilaufzweig (40).

3. Batterieladegerät (2) nach Anspruch 1 oder 2, mit einem der Sekundärwicklung (14b) zugeordneten, einen von der Steuerung (24) bedienten kurzschließenden Freilaufschalter (37) enthaltenden Freilaufzweig (40).

4. Batterieladegerät nach Anspruch 3, bei dem der Freilaufzweig im Diodengleichrichter integriert ist.

5. Batterieladegerät (2) nach Anspruch 4, bei dem der Gleichrichter (20) ein Diodengleichrichter ist und mindestens zwei der Teilzweige (19a-d) des Gleichrichters (20) je einen Freilaufzweig (40) mit einem von der Steuerung (24) bedienten kurzschließenden Freilaufschalter (37) bilden.

6. Batterieladegerät (2) nach einem der vorhergehenden Ansprüche, mit einem von der Steuerung (24) bedienten den Ausgang (8) vom Eingang (4) trennenden Trennschalter (44).

7. Batterieladegerät (2) nach Anspruch 6, bei dem der Trennschalter (44) im Gleichrichter (20) enthalten ist.

8. Verfahren zum Betreiben eines Batterieladegerätes (2) nach einem der Ansprüche 1 bis 7, bei dem das Steuergerät (24) den Taktschalter (16) im ständigen Wechsel ein erstes Zeitintervall ($\Delta T1$) lang einschaltet und ein zweites Zeitintervall ($\Delta T2$) lang ausschaltet, wobei das erste Zeitintervall ($\Delta T1$) dann beendet wird, wenn der Strom (IN) auf einen Grenzwert ($I_0$) angestiegen ist, der dem mit einem Skalierungsfaktor (34) multipliziertem augenblicklichem Wert der Spannung ($U_N$) entspricht, und wobei das zweite Zeitintervall ($\Delta T2$) so lange gewählt wird, dass die Gesamtdauer von erstem ($\Delta T1$) und zweitem Zeitintervall ($\Delta T2$) der Periodendauer eines Intervalls zulässiger Arbeitsfrequenzen ($f_a$) des HF-Speichertransformators (12) entspricht.

9. Verfahren nach Anspruch 8, bei dem der Skalierungsfaktor (34) aus dem Maximalwert der Spannung ($U_N$) und einer am Eingang (4) fließenden maximalen Soll-Stromstärke ($I_{max}$) ermittelt wird.

10. Verfahren nach einem der Ansprüche 8 bis 9, bei dem innerhalb des ersten ($\Delta T1$) und/oder zweiten Zeitintervalls ($\Delta T2$) ein drittes Zeitintervall ($\Delta T3$) lang die Primär- (14a) oder Sekundärwicklung (14b) im Freilaufbetrieb mit einem Freilaufzweig (40) betrieben wird.

fig. 1

30

16, 44, 40

Fig. 2a

20

19a

19b

$D_1$    $D_2$

$I_{D1}$

18b

$D_3$    $D_4$

18a

19c

19d

Fig. 2b

Fig. 3a

Fig. 3b

Fig. 4

Fig. 5a

Fig. 5b

EP 2 209 180 A1

Fig. 6

(Stand der Technik)
Fig. 7

Europäisches
Patentamt

European
Patent Office

Office européen
des brevets

# EUROPÄISCHER RECHERCHENBERICHT

**Nummer der Anmeldung**

EP 09 01 5179

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 5 570 279 A (VENKATARAMANAN GIRI [US]) 29. Oktober 1996 (1996-10-29) * Zusammenfassung; Abbildungen 7,11,12 * * Spalte 9, Zeile 66 - Spalte 10, Zeile 38 * ----- | 1,2,8 | INV. H02J7/02 H02M5/22 H02M1/42 |
| A | SUZUKI Y ET AL: "An approach to the AC to AC/DC converter" 6. Oktober 1996 (1996-10-06), TELECOMMUNICATIONS ENERGY CONFERENCE, 1996. INTELEC '96., 18TH INTERNA TIONAL BOSTON, MA, USA 6-10 OCT. 1996, NEW YORK, NY, USA,IEEE, US LNKD-DOI:10.1109/INTLEC.1996.573358, PAGE(S) 434 - 441 , XP010204351 ISBN: 9780780335073 * Zusammenfassung * * Seiten 436,438,; Abbildungen 1,6 * * Seite 440 - Seite 441; Abbildung 10(a) * ----- | 1,2,8 | |
| A | CHEN ET AL: "Novel Current Mode AC/AC Converters with High Frequency AC Link" 1. Januar 2005 (2005-01-01), POWER ELECTRONICS SPECIALISTS CONFERENCE, 2005. PESC '05. IEEE 36TH, IEEE, PISCATAWAY, NJ, USA LNKD- DOI:10.1109/PESC.2005.1581599, PAGE(S) 39 - 44 , XP031000156 ISBN: 9780780390331 * Seite 39 - Seite 40; Abbildungen 1-2 * ----- | 1,2,8 | RECHERCHIERTE SACHGEBIETE (IPC) H02J H02M |

Der vorliegende Recherchenbericht wurde für alle Patentansprüche erstellt

| Recherchenort | Abschlußdatum der Recherche | Prüfer |
|---|---|---|
| München | 29. April 2010 | Zeng, Wenyan |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 09 01 5179

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2010

| Im Recherchenbericht angeführtes Patentdokument | Datum der Veröffentlichung | Mitglied(er) der Patentfamilie | Datum der Veröffentlichung |
|---|---|---|---|
| US 5570279 A | 29-10-1996 | KEINE | |

EPO FORM P0461

Für nähere Einzelheiten zu diesem Anhang : siehe Amtsblatt des Europäischen Patentamts, Nr.12/82